# DEMANDE DE BREVET EUROPEEN

(11) **EP 1 217 853 A2**
(43) Date de publication de la demande: **26.06.2002**
(21) Numéro de dépôt: 01402993.8
(22) Date de dépôt: 22.11.2001
(51) Int. Cl.: H04Q 7/36

(54) **Procédé de régie d'un réseau radiomobile, et infrastructure de réseau radiomobile**

(30) Priorité: 07.12.2000 FR 0015886
(71) Demandeur: ALCATEL, 75008 Paris (FR)
(72) Inventeur: Guirauton , Alain, 95100 Argenteuil (FR); Pinault, Francis, 92270 Bois-Colombes (FR)
(74) Mandataire: Sciaux, Edmond

(57) **Abrégé**

Le procédé est destiné à être mis en oeuvre dans un réseau radiomobile (1) doté d'une infrastructure mobile parce qu'il est situé sur un navire, par exemple. Un navire peut être situé alternativement dans une zone desservie par aucun réseau radiomobile publique, ou dans une zone desservie par au moins un réseau radiomobile public (20). Un premier but de l'invention est de permettre à ce navire de communiquer avec un réseau téléphonique public au moindre coût dans tous les cas. Un deuxième but est d'éviter des interférences lorsqu'au moins un réseau radiomobile à infrastructure fixe exploite des ressources utilisées aussi par le réseau situé à bord du navire.

Le réseau à infrastructure mobile effectue une détection des émissions des autres réseaux radiomobiles, afin de:
- déterminer s'il se trouve à proximité d'un réseau radiomobile à infrastructure fixe;
- et d'enclencher alors, avec ce réseau radiomobile à infrastructure fixe (20), une procédure de détermination et de partage des fréquences d'émission.

## Description

L'invention concerne un procédé de régie d'un réseau radiomobile doté d'une infrastructure mobile, parce qu'il est situé sur un navire par exemple.

Un réseau radiomobile à bord d'un navire permet aux passagers de téléphoner en utilisant leurs terminaux radiotéléphoniques habituels, de type GSM par exemple. Mais ce réseau à infrastructure mobile doit être relié à un réseau public de télécommunication, en permanence, pour que les passagers puissent communiquer avec le reste du monde. D'autre part, il faut éviter que ce réseau radiomobile interfère avec des réseaux radiomobiles à infrastructure fixes.

Les réseaux radiomobiles terrestres se partagent un ensemble de ressources prédéterminées (des canaux radio, ou des intervalles temporelles, selon le type de réseau). Chaque réseau radiomobile terrestre dispose ainsi d'un groupe particulier de ressources prévues pour être exploitées dans une zone continentale déterminée afin d'assurer les communications impliquant des mobiles. L'attribution des ressources entre réseaux terrestres est réalisée de manière que des réseaux appartenant à des opérateurs différents, utilisent des ressource différentes dans les zones géographiques où ils coexistent, ces ressources leur étant attribuées de manière fixe. Les mêmes ressources peuvent être attribuées à des réseaux radiomobiles différents dans différentes zones continentales.

Il n'est pas prévu que les attributions soient réalisées de manière dynamique. Cependant, il existe un certain nombre de cas, où il est souhaitable de pouvoir temporairement accepter, au niveau d'une zone géographique couverte par un ou plusieurs réseaux terrestres ayant une infrastructure fixe, un autre réseau radiomobile ayant une infrastructure mobile. Cet autre réseau dispose de ressources qui sont susceptibles d'être identiques à des ressources mises en oeuvre par les réseaux à infrastructure fixe dans la zone considérée.

De telles infrastructures mobiles sont installées dans de grands véhicules de transport, tels que ceux prévus pour le transport maritime ou aérien de passagers. De telles infrastructures mobiles peuvent aussi être transportables d'un site de fonctionnement temporaire à un autre, pour répondre à des besoins ponctuels et temporaires, par exemple en liaison avec une manifestation commerciale et/ou sportive ou dans un but d'assistance ou de secours.

Il est aussi possible que plusieurs réseaux à infrastructures mobiles, disposant de ressources identiques, se trouvent temporairement voisins, par exemple plusieurs navires dans une même zone portuaire ou dans une même zone de circulation réglementée.

Le document **US 5.867.785** décrit un réseau à infrastructure mobile installé dans un train. Ce train se déplace dans une zone entièrement couverte par un réseau radiomobile à infrastructure fixe. L'infrastructure mobile comporte un contrôleur qui balaye les canaux de contrôle émis par des stations de base du réseau à infrastructure fixe. Le contrôleur de l'infrastructure mobile détermine la qualité de chaque signal reçu pour déterminer la station de base la plus proche. Via cette station de base, il s'enregistre auprès du contrôleur du réseau à infrastructure fixe. Ce dernier lui attribue un jeu de ressources (des canaux radio, ou des intervalles temporelles, selon le type de réseau) qui est un sous-ensemble du jeu de ressources affecté à la station de base par laquelle il s'est fait enregistrer. Le réseau à infrastructure mobile devient ainsi une extension du réseau à infrastructure fixe.

Selon un autre mode de réalisation le contrôleur du réseau à infrastructure mobile balaye les canaux de contrôle émis par les stations de base du réseau à infrastructure fixe. Il détermine la qualité de chaque signal reçu pour déterminer les stations de base fixes qui sont suffisamment proches pour causer des interférences avec ce réseau à infrastructure mobile. Il s'interdit d'attribuer des ressources utilisées par les stations de base fixes qui sont reçues avec un niveau de qualité supérieur à un seuil fixé, et il en déduit un jeu de ressources qu'il utiliser, en choisissant des ressources qui sont utilisées par une station de base qui n'est pas reçue avec un niveau de qualité supérieur à un seuil fixé. Le réseau à infrastructure mobile fonctionne ainsi de manière autonome par rapport au réseau à infrastructure fixe, sans interférer avec lui.

Un tel système ne peut pas être transposé directement dans un navire car un navire peut aller n'importe où, de manière imprévisible. Un navire peut être situé alternativement dans une zone desservie par aucun réseau radiomobile à infrastructure fixe, ou dans une zone desservie par au moins un réseau radiomobile à infrastructure fixe. Un premier but de l'invention permettre à ce réseau de communiquer avec un réseau téléphonique public au moindre coût dans tous les cas. Un deuxième but est d'éviter des interférences lorsque un ou plusieurs réseaux radiomobiles à infrastructure fixe sont susceptibles d'exploiter les mêmes ressources radio que ce réseau à infrastructure mobile.

L'objet de l'invention est un procédé de régie d'un réseau radiomobile à infrastructure mobile, **caractérisé** en ce qu'il consiste :
- d'une part, à établir une liaison entre ce réseau radiomobile à infrastructure mobile et un réseau téléphonique fixe via au moins un satellite, lorsque ce réseau radiomobile à infrastructure mobile est éloigné de tout réseau radiomobile à infrastructure fixe avec lequel il serait capable d'établir une liaison radio ;
- et d'autre part, à établir une liaison radio entre ce réseau radiomobile à infrastructure mobile et un réseau radiomobile à infrastructure fixe lorsque ce réseau radiomobile à infrastructure mobile est à proximité de ce réseau radiomobile à infrastructure fixe et qu'ils sont capables d'établir une liaison radio entre eux.

L'invention concerne aussi une infrastructure mobile de réseau radiomobile, pour la mise en oeuvre du procédé de régie évoqué ci-dessus.

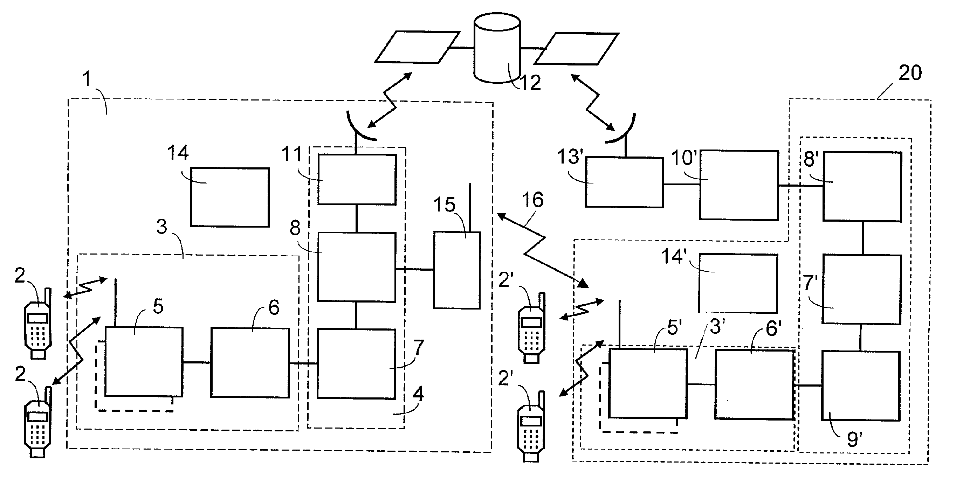

L'invention, ses caractéristiques, et ses avantages sont précisés dans la description qui suit en liaison avec la figure unique. La figure unique est un schéma de principe où sont représentés un réseau radiomobile à infrastructure fixe 20 et un réseau radiomobile à infrastructure mobile 1 situé à bord d'un navire par exemple. Ce réseau radiomobile à infrastructure mobile 1 est doté de moyens de liaison 11 lui permettant d'acheminer des communications vers un réseau public terrestre de télécommunication 10', via un satellite 12 ou une constellation de satellites, lorsqu'il est en haute mer ou dans toute autre zone démunie de moyens de télécommunication utilisables. Mais il est doté aussi de moyens de moyens de liaison 15 lui permettant d'établir une liaison radio 16 avec un réseau radiomobile à infrastructure fixe, tel que le réseau 20, pour acheminer des communications vers un réseau public terrestre de télécommunication 10', lorsque le navire est à proximité des côtes, ou dans un port. Le réseau 1 peut comporter en outre des moyens de liaison (non représentés) pour exploiter des liaisons par câble ou des liaisons par faisceaux hertziens, lorsque le navire est à poste fixe dans un port. Le réseau public terrestre de télécommunication 10' est relié à une station 13' constituant une passerelle pour établir une liaison herzienne avec le satellite 12 ou une constellation de satellites.

Les réseaux 1 et 20 sont par exemple des réseaux radiomobiles de type GSM (pour "Global System for Mobile communications") ou UMTS (pour "Universal Mobile Telecommunication System"). Le réseau 1 dessert des terminaux mobiles 2 à bord du navire. Il a une infrastructure classique se subdivisant en trois sous-systèmes principaux. Cette infrastructure comporte :
- un sous-système radio 3 pour assurer les transmissions avec les terminaux mobiles 2, et la gestion des ressources radio qui permettent ces transmissions ;
- un sous-système d'acheminement 4 qui comprend notamment l'ensemble des fonctions nécessaires à l'établissement des appels, au départ ou en arrivée, concernant les terminaux mobiles 2 ;
- et un sous-système d'exploitation et de maintenance 14.

Le réseau radiomobile à infrastructure fixe 20 comporte lui aussi un sous-système radio 3' desservant des terminaux mobiles 2' ; et un sous-système d'acheminement 4'. Les sous-systèmes radio du réseau 1 à infrastructure mobile et du réseau 20 à infrastructure fixe sont constitués de manière semblable. A titre d'exemple, ils comportent des stations de base émettrices-réceptrices, 5 respectivement 5', et chacun au moins un contrôleur de stations de base, 6 respectivement 6'.

Les sous-systèmes d'acheminement des deux réseaux 1 et 20 sont structurés de manière légèrement différente en raison de leurs spécificités respectives. Le sous-réseau d'acheminement 4 du réseau 1 à infrastructure mobile est, a priori, plus réduit que celui du réseau 20 à infrastructure fixe. Il comporte essentiellement un serveur 7, propre à l'opérateur qui gère le réseau 1. Dans cet exemple, ce serveur 7 est un classique serveur d'opérateur de réseau GSM. Ce serveur 7 est installé entre le contrôleur 6 du réseau 1 et un commutateur privé 8, propre au réseau 1, du genre commutateur téléphonique multiservice. Le commutateur 8 est relié :
- aux moyens de liaison 11 constitués d'une unité d'accès permettant d'établir une liaison hertzienne avec le satellite de 12 ;
- et aux moyens de liaison 15 constitués d'un émetteur-récepteur radio capable d'établir une liaison radio 16, capable de transporter plusieurs communications téléphoniques simultanément, avec une station de base d'un autre réseau radiomobile, notamment un réseau de type GSM tel que le réseau 20.

Dans le cas du réseau radiomobile à infrastructure fixe, tel que le réseau 20, le sous-réseau d'acheminement 4' comporte par exemple, un serveur d'opérateur, 7', correspondant fonctionnellement au serveur 7. Ce serveur 7' est relié à au moins un commutateur central 9' dédié aux services mobiles, auquel le contrôleur 6' est raccordé. Dans l'exemple présenté, le serveur 7' est relié au réseau public terrestre de télécommunications 10', par l'intermédiaire d'un commutateur 8' qui est ici supposé être un commutateur privé 8'.

Pour que le réseau 1 puisse communiquer avec le réseau 20, ces réseaux doivent comporter des moyens de liaison dont le débit soit suffisant pour permettre l'établissement d'une pluralité de communications simultanées, et la transmission de divers signaux d'information et de signalisation. Il est alors possible aux sous-systèmes d'exploitation et de maintenance, 14 et 14', de communiquer entre eux, dans des conditions connues, par exemple par l'intermédiaire de protocoles classiques de signalisation, tels que le protocole SS7.

Comme il est connu, un opérateur d'un réseau radiomobile terrestre GSM couvrant une zone continentale déterminée dispose d'une bande de fréquences qui lui est allouée pour lui permettre de desservir les terminaux mobiles qui se trouvent dans cette zone et qui se localisent ou sont localisés auprès de ce réseau. D'autres bandes de fréquences sont allouées aux opérateurs disposant eux aussi de réseaux radiomobiles GSM à infrastructure fixe qui couvrent au moins partiellement la zone déterminée qui a été considérée ci-dessus. Ces bandes sont choisies différentes de manière à éviter les risques d'interférence liés à l'utilisation d'une même fréquence par des émetteurs exploités dans des réseaux radiomobiles différents.

Par contre, si un opérateur dispose d'un réseau GSM à infrastructure mobile et en particulier un réseau dont l'infrastructure est embarquée sur un navire de haute mer, il est susceptible de ne pas être inclus dans le plan de fréquences selon lequel les bandes sont attribuées aux différents opérateurs pour une zone continentale déterminée. Ce réseau GSM à infrastructure mobile est donc susceptible d'exploiter des fréquences attribuées à d'autres, lorsqu'il se localise temporairement dans une zone.

L'émetteur-récepteur radio 15 est agencé pour détecter les émissions réalisées dans le cadre d'un réseau radiomobile autre que le réseau 1. Cet équipement permet, par exemple, de balayer les différentes fréquences exploitables pour des communications radiomobiles, de manière à déterminer la présence d'un autre réseau radiomobile à proximité, avant que les communications établies avec des terminaux mobiles via l'un ou l'autre des réseaux ne puissent être perturbées. Cette détection est par exemple réalisée en recherchant les voies balises qui caractérisent les différentes stations de base des réseaux radiomobiles, et qui contiennent des informations permettant de connaître l'identité du réseau dont elles font partie, et ses caractéristiques d'accès. Comme il est connu dans le cadre d'un réseau GSM, la voie balise d'une station de base est constituée par un signal modulé, dit fréquence balise, émis en permanence et à puissance constante, par cette station, au profit des terminaux mobiles ; et par un ensemble de canaux de diffusion couramment dénommés "Broadcast Channels", qui est implanté sur cette fréquence balise, et dont un canal, appelé BCCH (pour "Broadcast Control Channel"), comporte les informations d'identification indiquées ci-dessus.

Les opérations de détection effectuées par l'émetteur-récepteur 15 sont pilotées par l'intermédiaire d'un programme de détermination de l'environnement radiomobile où se trouve le réseau 1, ce programme étant implanté au niveau d'un module spécialisé du sous-système d'exploitation 14 de ce réseau. Les opérations de détection et de partage sont les suivantes :
- Dans une première étape, le sous-système d'exploitation 14 du réseau 1 interdit l'usage des fréquences exploitables pour des communications avec des terminaux mobiles, qui sont déjà allouées à une station de base qui est externe au réseau 1 et dont le canal BCCH a été détecté. A titre d'exemple, le réseau détecté est le réseau 20.
- Dans une deuxième étape, le sous-système d'exploitation 14 du réseau 1 enclenche une procédure de dialogue entre le réseau 1 et le réseau détecté 20. Une liaison est établie, à cette occasion, entre les sous-systèmes d'exploitation 14 et 14' de ces deux réseaux 1 et 20. Cette liaison entre les sous-systèmes d'exploitation 14 et 14' est établie par l'intermédiaire de l'unité d'accès 11, du satellite 12, de la station 13', et du réseau public terrestre 10'.
- Dans une troisième étape, lorsque les deux réseaux 1 et 20 ont pu dialoguer et s'entendre pour établir une liaison via l'émetteur-récepteur 15, le sous-système d'exploitation 14 du réseau 1 commande le commutateur 8 pour acheminer les communications téléphoniques via l'émetteur-récepteur 15 au lieu des moyens d'accès 11 vers le satellite 12.

Comme il est connu, chaque sous-système d'exploitation 14, 14' est relié, aux autres sous-systèmes du réseau radiomobile dont il fait partie, d'une manière appropriée, qui ne sera pas développée ici dans la mesure où elle n'a pas de rapport direct avec l'objet de la présente invention.

Bien entendu, une liaison peut aussi être établie entre deux réseaux à infrastructure mobile (Deux navires) se trouvant à portée radio l'un de l'autre dans une même zone géographique, dans le cadre d'une procédure de dialogue telle qu'évoquée ci-dessus. Il est également envisageable qu'un même réseau 1 ait à établir plusieurs dialogues ou une procédure de conférence ayant même fonction, s'il se trouve simultanément dans une zone géographique qui est couverte par plusieurs autres réseaux radiomobiles.

La procédure de dialogue qui est enclenchée par un réseau 1 avec un autre réseau est destinée à permettre de déterminer quelles sont les fréquences qu'il pourra utiliser lorsqu'il sera dans la même zone géographique que ce réseau détecté. A cet effet, il est nécessaire que les réseaux concernés, 1 et 20, soient équipés l'un et/ou l'autre de moyens de partage de ressources, au niveau de leurs sous-systèmes d'exploitation respectifs, 14 et 14'. Ces moyens de partage informent chacun des deux réseaux, 1 et 20, des fréquences qu'il peut exploiter.

Ces moyens de partage sont des moyens logiciels dont la réalisation est à la portée de l'homme de l'Art. Ils peuvent être organisés de différentes manières suivant que les réseaux radiomobiles concernés sont considérés sur un pied d'égalité ou selon une relation de type maître-esclave. Dans le premier cas, les deux réseaux 1 et 20 sont dotés de moyens de partage fonctionnellement identiques ou compatibles entre eux. Ils sont programmés de manière à déterminer d'un commun accord quelles seront les fréquences qui seront exploitées par l'un, et interdites à l'autre. Dans le second cas, si le réseau 1 est considéré comme esclave, les moyens de partage prévus dans le système d'exploitation 14 du réseau 1 peuvent se limiter à des moyens d'enregistrement des fréquences qui lui sont autorisées, lorsqu'il se trouve dans une zone où se trouve un autre réseau radiomobile, 20 par exemple, prévu pour agir en tant que maître et en conséquence pour décider de l'attribution de fréquences selon une programmation prédéterminée et en fonction de la situation.

Il est habituel de réutiliser les mêmes fréquences pour des communications réalisées dans des cellules différentes, d'un même réseau radiomobile, qui couvrent une zone géographique continentale déterminée, lorsqu'il existe des cellules qui sont suffisamment éloignées les unes des autres pour le permettre, ce qui est généralement le cas.

Dans le cas d'un réseau radiomobile à infrastructure fixe établi dans une zone bordée par une côte, il n'est normalement pas prévu de stations de base au-delà de la côte. Il est donc possible d'attribuer des fréquences qui sont exploitées par des stations de base propres à des cellules qui sont situées à distance de la côte, à un autre réseau radiomobile et en particulier à un réseau sur un navire.

Dans une forme de réalisation, il est prévu que les cellules de réseau radiomobile que définissent les stations de base 5 du réseau 1 à infrastructure mobile soient prises en compte comme de nouvelles cellules de l'infrastructure fixe d'un réseau radiomobile situé dans la zone géographique de couverture où le réseau 1 vient temporairement se localiser. Cette assimilation est réalisée par mise en oeuvre d'un processus impliquant une coopération entre les sous-systèmes d'exploitation 14 et 14' des deux réseaux 1 et 20 concernés. Il est alors possible aux terminaux mobiles initialement desservis par l'un de ces deux réseaux de se déplacer dans la zone géographique couvertes par l'un et/ou l'autre sans qu'il y ait d'interruption des communications qu'ils ont établies en profitant des procédures d'itinérance ("roaming" en Anglais) prévues à cet effet au niveau de ces deux réseaux.

Il est aussi envisagé de mettre en oeuvre de telles dispositions dans le cas de deux réseaux à infrastructure mobile, par exemple de deux navires localisés à proximité l'un de l'autre d'une manière telle que leurs zones de couverture respectives se recoupent.

La portée de l'invention n'est pas limitée aux réseaux de type GSM et UMTS. Il est à la portée de l'Homme de l'Art d'adapter le procédé et l'infrastructure mobile à d'autres normes de réseau cellulaire.

## Revendications

1. Procédé de régie d'un réseau radiomobile à infrastructure mobile (1), **caractérisé en ce qu'**il consiste :
- d'une part, à établir une liaison entre ce réseau radiomobile à infrastructure mobile (1) et un réseau téléphonique fixe (10') via au moins un satellite (12), lorsque ce réseau radiomobile à infrastructure mobile (1) est éloigné de tout réseau radiomobile à infrastructure fixe (20') avec lequel il serait capable d'établir une liaison radio ;
- et d'autre part, à établir une liaison radio (16) entre ce réseau radiomobile à infrastructure mobile (1) et un réseau radiomobile à infrastructure fixe (20) lorsque ce réseau radiomobile à infrastructure mobile (1) est à proximité de ce réseau radiomobile à infrastructure fixe (20) et qu'ils sont capables d'établir une liaison radio (16) entre eux.

2. Procédé selon la revendication 1, **caractérisé en ce que**, pour éviter les risques d'exploitation simultanée d'une même fréquence dans le réseau radiomobile à infrastructure mobile (1) et dans un réseau radiomobile à infrastructure fixe (20), il consiste en outre à :
- faire détecter par le réseau à infrastructure mobile (1) des émissions réalisées dans le cadre d'un réseau radiomobile à infrastructure fixe (20),
- et enclencher avec ce réseau radiomobile à infrastructure fixe (20) une procédure de détermination et de partage des fréquences.

3. Procédé de régie, selon la revendication 1, dans lequel la détection des émissions réalisées dans le cadre d'un réseau radiomobile à infrastructure fixe (20), consiste en un balayage en fréquence permettant de déterminer les voies balises émises par des stations de base (5') dans le cadre d'un réseau radiomobile à infrastructure fixe (20), et permettant d'identifier le ou les réseaux mobiles fixes qui sont proches (20), à partir des informations d'identifications contenues dans chacune de ces voies.

4. Procédé de régie, selon l'une des revendications 1 ou 2, dans lequel la procédure de détermination et de partage des fréquences consiste en outre à considérer les cellules, que définissent les stations de base (5) propres au réseau radiomobile à infrastructure mobile (1), comme des cellules du réseau radiomobile à infrastructure fixe (20) ; des fréquences communément exploitables par les deux réseaux étant alors attribuées à des stations de base du réseau à infrastructure mobile (1), ces fréquences étant choisies parmi celles exploitées pai des stations de base (5') situées hors de portée radio.

5. Infrastructure, dite mobile, pour un réseau radiomobile (1), **caractérisée en ce qu'**elle comporte :
- d'une part des moyens (14, 7, 8, 11) pour établir une liaison entre ce réseau radiomobile à infrastructure mobile (1) et un réseau téléphonique fixe (PSTN) via au moins un satellite (12), lorsque ce réseau radiomobile à infrastructure mobile (1) est éloigné de tout réseau radiomobile à infrastructure fixe (20) avec lequel il serait capable d'établir une liaison radio ;
- et d'autre part des moyens (14, 7, 8, 15) pour établir une liaison entre ce réseau radiomobile à infrastructure mobile (1) et un réseau radiomobile à infrastructure fixe (20) lorsque ce réseau radiomobile à infrastructure mobile (1) est à proximité de ce réseau radiomobile à infrastructure fixe (20) et qu'ils sont capables d'établir une liaison radio (16) entre eux.

6. Infrastructure selon la revendication 5, **caractérisée en ce que**, pour éviter les risques d'exploitation simultanée d'une même fréquence dans le réseau radiomobile à infrastructure mobile (1) et dans un réseau radiomobile à infrastructure fixe (20), elle comporte en outre des moyens (14, 15) pour :
- détecter des émissions réalisées dans le cadre d'un réseau radiomobile à infrastructure fixe (20),
- et enclencher une procédure de détermination et de partage des fréquences avec un réseau radiomobile à infrastructure fixe (20) qui a été détecté.
